# EUROPEAN PATENT APPLICATION

(11) **EP 4 000 822 A1**
(43) Date of publication of application: **25.05.2022**
(21) Application number: 20209405.8
(22) Date of filing: 24.11.2020
(51) Int. Cl.: B25J 19/00

(54) **BALANCING SYSTEM FOR A HANDLING ROBOT**

(71) Applicant: System 3R International AB, 162 50 Vällingby (SE)
(72) Inventor: Dahlquist, Håkan, 165 72 Hässelby (SE); Blixt, Mårten, 178 34 Ekerö (SE); Hansson, Stefan, 172 31 Sundbyberg (SE)
(74) Representative: Fenner, Seraina

(57) **Abstract**

The present invention is directed to a balancing system for handling robot having a robot arm, in particular a cylindrical arm system comprising:
a. a cylinder, in particular a telescopic cylinder (10) comprising a cylinder chamber (13) for receiving a liquid and a piston having a piston rod (14), in particular a telescopic piston rod, on which the robot arm is attached and the robot arm can be driven by a motor to move in the vertical direction;
b. a gas-oil accumulator (20) comprising an accumulator housing (21) and a first accumulator chamber (22) for receiving the gas and a second accumulator chamber (23) for receiving the liquid, wherein a balancing force is defined by the pressure in the first accumulator chamber, and wherein the first accumulator chamber and the second accumulator chamber are separated by a movable displacement means (24) and the second accumulator chamber and the cylinder chamber can communicate with each other; a gas tank (30) connected through a valve (40) to the gas-oil accumulator to change the pressure in the first accumulator chamber by actuating the valve; and
c. a control unit configured to determine the power consumption of the motor and to adjust the balance force based on the measured power consumption.

## Description

The present invention relates to a balancing system for a handling robot. In further, the present invention is directed to a method for setting balancing force of the balancing system for the handling robot.

### BACKGROUND OF THE INVENTION

An industrial robot is a machine, which is capable of automatically carrying out specific actions in an industrial environment. The industrial robots are programmable and able to move in multiple axes. In some applications, such as for automatic pallet changer a handling robot is used, which is able to carry point-to-point motion. As for many mechanical systems, static balancing is an essential step in the design of the system. EP 2 301 727 A2 discloses a robot with a weight balancing system. The robot has a robot arm with a set of axes, where the robot arm is designed for a high payload. A gas based weight equalization system is arranged for one of the axes, whose pressurized components e.g. pressure cylinder and pressure accumulators, have a volume of less than 1 liter and a maximum pressure of less than 1000 bars. The payload is greater than 90 kilograms. The pressure accumulators are operatively connected with a pressure cylinder. The robot arm has a carousel and a swing arm.

The main static load is defined by weight forces of all parts of the mechanical systems. However, in some industrial robots, the weight forces could be variable in different actions taken by the robot. In particular, the handling robots used in for example for palletizing can have a large range of the variable payload, because the objects to be moved by the robots can have different weights. Therefore, the balancing force must be adjusted to the variable payload. In the known system, the gas cylinder or gas tank is initially filled up to a predefined pressure and will not be changed during the operation. This has the drawback that the balancing system is then only taken a part of total arm system and the payload weight. In further, the predefined pressure must be selected concerning the maximum and minimum surrounding temperatures in various workshops and during the day and time of the year. This limits additionally the part of the weight that the balancing system can take. The total consequences of initially filled up is the need for larger and more expensive motor and drive system than necessary. Consequently, this requires a much higher electrical power consumption.

### SUMMARY OF THE INVENTION

It is an objective of this invention to provide an improved balancing system for the handling robot such that the balancing force can be adapted to the variation of the payload. In particular, it is an objective to provide a method for automatically adjusting the balancing force to the variation of the payload.

According to the present invention, these objectives are achieved through the features of claim 1. In addition, further advantageous embodiments follow from the dependent claims and the description.

A balancing system for handling robot having a robot arm, a cylinder, a gas-oil accumulator, a gas tank and a control unit. In particular, the cylinder is a telescopic cylinder. The cylinder comprises a cylinder chamber for receiving a liquid and a piston having a piston rod, on which the robot arm is fixedly mounted. The robot arm is driven by a motor to move in the vertical direction, namely in the z-direction.

When the cylinder is a telescopic cylinder, it comprises a cylinder chamber for receiving a liquid and a piston having a telescopic piston rod, on which the robot arm can be attached and when the robot arm moves in the vertical direction, the telescopic piston rod can be extended and retracted in the axial direction of the cylinder. In particular, a ballscrew or gear transmission is provided to transmit the movement generated by motor to the robot arm. In one particular variant, the ball screw or gear transmission drive for linear motion, for example to move the robot arm attached thereon in the Z-direction. The telescopic cylinder provides a force upwards due to the liquid pressure generated in the cylinder chamber. The cylinder and the piston are made of for example steel. The gas-oil accumulator comprises an accumulator housing, a first accumulator chamber for storing the gas and a second accumulator chamber for storing the liquid. The first accumulator chamber and the second accumulator chamber are separated by a movable displacement means, and the second accumulator chamber and the cylinder chamber can communicate with each other. The displacement means serves as a freely movable piston and separates the gas from the liquid but transmits the gas pressure to the liquid pressure. The displacement is a thin-walled element and fits the cross-section in the radial direction of the accumulator. The gas-accumulator has a volume in the range of 5 to 20 Litre, in particular, 8 litre or 10 Litre. The gas tank is connected through a valve to the gas-oil accumulator to be able to change the pressure in the first accumulator chamber by actuating the valve. The control unit is configured to determine the power consumption of the motor and to adjust the balancing force based on the measured power consumption to minimize the power consumption needed for a work cycle, a combination of work cycles during a skift, e.g. lasting eight hours or even each action of the robot. The control unit is configured to actuate the valve, if the balancing force must be adjusted. The valve is opened to allow the gas flowing between the accumulator and the gas tank for a period until an equilibrium of the pressure in the accumulator and in the gas tank is established. Afterwards, the valve is closed. The gas tank has a volume of in the range of 1 to 20 Litres, in particular, 4 litre or 8 litre. Since the gas tank can be integrated along with the gas-accumulator in the robot, the balancing force can be flexibly adapted by setting the robot arm to a defined position and by actuating the valve. For example, if the balancing system is integrated in handling robot, in which the robot arm moves in the Z-direction. As the gas pressure in the gas-oil accumulator varies with the Z-position of the telescopic cylinder and thus with the robot arm position, the robot arm is driven to a z-position with the chosen pressure used to fill up or evacuate. Since the balancing force is proportional to the gas pressure in the accumulator in order to adjust the balancing force, the robot arm is moved to a defined Z-position and the valve is opened, such that the gas in the gas-oil accumulator flows into the gas tank or the gas in the gas tank flows into the gas-oil accumulator depending on the pressure in the accumulator and the gas tank. Until the gas pressure in the accumulator and the gas tank reaches the equilibrium, the valve is closed. The pressure in the gas-oil accumulator depends on the quantity of the gas therein and is in the range of 20 to 200 bar, in particular from 50 to 100 bar.

In a preferred variant, the motor current is measured and the control unit is configured to determine the power consumption based on the measured motor current. The measured power consumption is the power needed to move the robot arm with objects thereon to move in the vertical direction. The payload of the robot is in the range of 50kg to 400 kg, in particular in the range from 80kg to 150kg.

The balancing force is a counteracting force to aid the robot to overcome the gravity effect. In the present invention, the balancing force is defined by the pressure of the gas in the first accumulator chamber and the surface area in the radial direction of the displacement means, on which the pressure acts. This force is transferred through the liquid on the piston in the cylinder to compensate at least a part of the forces and moments acting from outside on the robot arm, for example the force acting on the object to be carried by the robot arm due to gravity. The rated motor power consists of a static portion for just taking the gravity-balancing forces and a dynamic portion for acceleration and keeping a certain speed under influence of the gravity-balancing forces. This means, the motor power is still required even if the speed of the robot arm is zero. This kind of handling robots often have an idle time in the work cycle. When the most optimal balancing force has been gradually found, it means that this force could be higher than the gravity force in parts of the work cycle where the payload is low. In other parts of the work cycle, where the payload is high, i.e. a heavy pallet has been unloaded from the machine, the gravity force is higher than the balancing force.

In an advantageous variant, the control unit is configured to adjust the balancing force for each skift and/or each work cycle and/or each part of one work cycle. One work cycle defines for example the movements of the robot, when it fetches a pallet with a work piece thereon from a magazine, loads it into a machine tool and unloads it when it has been machined, and places the machined part in the magazine. Each work cycle includes one or more parts. The part of the work cycle is directed to the different movements of the robot within one work cycle, for example, fetching a pallet with a workpiece thereon from a magazine. The skift defines a time range of a day, for example from the start to the end of one day of the work. Within one work cycle, the robot could also first fetch light object, e,g, an EDM electrode before fetching a heavy workpiece. Thus, the balancing force must be set by considering variation of weights of objects to be carried by the robot arm. Normally, the balancing force is adjusted at the beginning of each work cycle. However, in some applications, the payload of one part of the work cycle is much higher than in other parts of the same work cycle, the balancing force must be increased to ensure the proper function of the robot. It is also possible that in one part of the work cycle the payload of is much lower than the other parts, the balancing force is preferably reduced to improve the power consumption efficiency.

In particular, the control unit is configured to use a machine-learning algorithm to determine the balancing force required for each skift and/or each work cycle and/or each step of one work cycle by changing the pressure in the cylinder chamber to minimize the total power consumption, in particular an algorithm for search for a minimum of a function, such as golden-section search. The total power consumption during a longer period such as a skift defines the needed rated power of the motor and thereby the size of the motor. It means further that without an adaptive balancing system, the motor can be overheated. Moreover, a storage unit is provided to store the determined optimal balancing force and the corresponding identify of skift, work cycle. It is also possible to determine the optimal balancing force for each workpiece and/or pallet, which are to be carried by the robot arm. Each skift, work cycle, workpiece and pallet can be assigned to an identification to be individually identifiable. The identifications and the determined optimal balancing force can be stored in the storage unit. Before the robot starts to conduct an operation, the stored identifications and the optimal balancing force can be readout from the storage and sent to the controller, which can based on this information control the valve and the robot arm to set the balancing force to the optimal value for this operation.

In some embodiments, the storage unit to store a plurality values of an initial balancing force and the corresponding payloads. In particular, the payload is defined by the highest weight to be carried by the robot arm during one work cycle.

In the present invention, a handling robot comprises a base, on which the cylinder, the gas tank and the gas-oil accumulator are fixed mounted and a lift to attach a motor thereon to control the movement of the robot arm in the Z-direction and the balancing system. The robot arm is configured to be able to rotate about a rotation axis in parallel to the Z-direction and is further configured to be extended in the horizontal direction.

In the present invention, a method for automatically adjusting the balancing force of the balancing system comprises the following steps:
a. selecting an initial balancing force Fᵢₙᵢ from the storage unit;
b. controlling the robot arm to be moved to a pre-defined initial Z-position Zᵢₙᵢ and actuating the valve;
c. running a work cycle and calculating an initial power consumption Pᵢₙᵢ of the motor;
d. adjusting the balancing force by placing the arm of the robot in a Z-position higher or lower than the initial Z-position and actuating the valve;
e. determining an optimal balancing force, wherein repeating the steps c and d until an minial power consumption is found based on an optimization algorithm, in particular a minimum power consumption is found by using the gold-section search;

In a preferred variant, the adjusting balancing force comprises following steps:
a. increasing the balance force by moving the robot arm to a Z-position higher than the previous Z- position and actuating the valve and calculating the power consumption using the increased balancing force; and/or
b. decreasing the balance force by moving the robot arm to a Z-position lower than the previous Z-position and actuating the valve and calculating the power consumption using the decreased balancing force; and/or
c. setting the balancing force to a first high balancing force Fₕ₁ by moving the robot arm to a first high Z-position Zₕₗ, which is higher than the initial Zᵢₙᵢ position and actuating the valve and running the work cycle and calculating a first power consumption Pₕ₁;
d. if the first high power consumption Pₕ₁ is lower than the initial power consumption Pᵢₙᵢ, repeating the step a;
e. if the first power consumption Pₕ₁ is higher than the initial power consumption Pᵢₙᵢ, setting the balancing force to a first low balancing force F_{l1,} which is lower than the initial balancing force Fᵢₙᵢ by placing the robot arm to a first low Z-position Zₗ₁ lower than the initial Z-position Zᵢₙᵢ, and running the work cycle and calculating a first low power consumption Pₗ₁;
f. if the first low power consumption Pₕ₁ is lower than the initial power consumption P_{int,} repeating the step b;

These steps are automatically conducted until a minimum power consumption is reached. The aim of the method is to find the optimal value from the least needed arm movements. In order to increase the speed of determining the balancing force for the minimum power consumption, different optimization algorithm can be utilized. In one variant, the Golden-section search technique is used, such that the optimal balancing force can be found using possibly less times of operating the valves, namely closing and opening valve,

### BRIEF DESCRIPTION OF THE DRAWINGS

In order to describe the manner in which advantages and features of the disclosure can be obtained, in the following a more particular description of the principles briefly described above will be rendered by reference to specific embodiments thereof which are illustrated in the appended drawings. These drawings depict only exemplary embodiments of the disclosure and are not therefore to be considered to be limiting of its scope. The principles of the disclosure are described and explained with additional specificity and detail through the use of the accompanying drawings in which:
- Fig. 1: illustrates a simplified schematic of the system;
- Fig. 2: illustrates the steps of the method;
- Fig.3a-b: illustrate a three-dimensional view of the system;
- Fig.4a-b: illustrate an example of a work cycle;
- Fig. 5a-b: illustrate a robot including the balancing system; and
- Fig. 6a-b: illustrate another robot including the balancing system.

### EXEMPLARY EMBODIMENTS

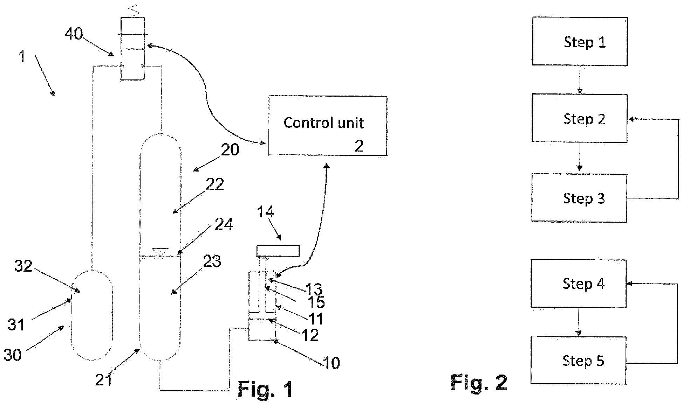

Figure 1 shows a schematic of a balancing system 1, which includes a telescopic hydraulic cylinder 10, a gas-oil accumulator 20, a gas tank 30 and a valve 40.

The hydraulic cylinder comprises a cylinder housing 11, a cylinder piston 12 arranged inside the cylinder and comprising a piston rod 15 and a piston seal 12. The piston seal fits the inner wall of the cylinder and the piston rod is mounted vertically on the piston seal and extends out of the cylinder housing. The piston seal divides the interior of the cylinder into two cylinder chambers, a first cylinder chamber 13 and a second cylinder chamber. The first cylinder chamber is located on the upper part of the piston seal and the second cylinder chamber is located on the lower part of the piston seal. The second cylinder chamber is filled with oil. A robot arm 14 can be mounted on the top of the piston. The robot arm is driven by a motor to move in the Z direction and thereby to extend and retract the telescopic piston.

The gas-oil accumulator has a displacement means fitted therein and dividing the interior of the accumulator into two parts, a first accumulator chamber 22 and a second accumulator chamber 23. The displacement means is movable such that the volume of the both chambers can be changed. The first accumulator chamber is filled with gas and is connected with the gas tank through the valve. The second accumulator chamber 22 is filled with oil and is connected with the second cylinder chamber 13 by a pipe, therefore, the oil and flow between the second accumulator chamber and the second cylinder chamber. A control unit 2 is included in the system to control the open- and close of the valve. By actuating the valve the gas pressure in the gas-oil accumulator can be adjusted. By opening the valve the gas in the gas tank can flow into and away from the first accumulator. A two-way valve is applied, since the gas can flow in both directions. Initially, the gas tank is filled up with gas to obtain a defined initial pressure, e.g. 80 bar. The robot arm is set to the middle of z-position and the valve is opened for a time interval of several seconds and is closed afterwards. If the balancing force should be increased, the robot arm is driven by the motor or manually to a z-position above the middle z-position. The pressure in the gas tank is still the initial pressure. But, when the valve is opened, the gas flows from the gas tank to the accumulator. After the valve is closed again, the robot arm is moved back to the middle z-position, the pressure in the accumulator chamber is increased. Consequently, the balancing force is increased. If the balancing force should be reduced, the robot arm is driven by the motor or manually to a z-position below the middle z-position. When the valve is opened, the gas flows from the accumulator to the tank. After the valve is closed again, the robot arm is moved back to the middle z-position, the pressure in the accumulator chamber is reduced. Consequently, the balancing force is increased.

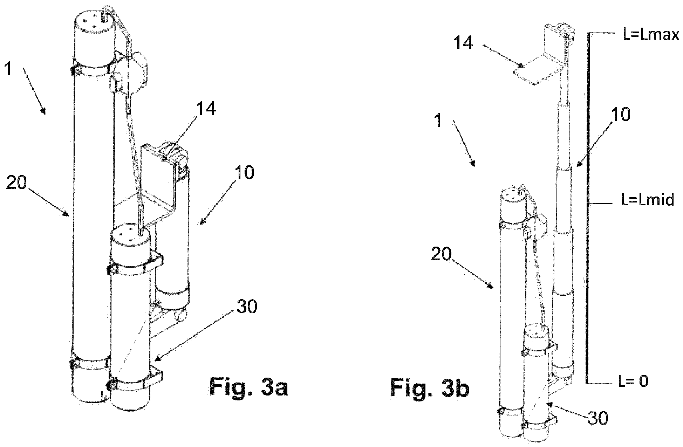

Figures 3a and 3b show one embodiment of the balancing system. As shown in figures 3a and 3b the piston of the cylinder can be extended and retracted in the vertical direction, in particular in the Z-direction, when the robot arm moves in the Z-direction.. When the robot arm is driven by the motor upwards, the piston is extended upwards. When the robot arm is driven by the motor downwards, the piston is retracted. The telescopic piston includes a plurality of tubes nested with each other. The tube having the smallest diameter is the piston rod, which is uppermost element when the cylinder is extended in the full-length. When the balancing system is mounted in a handling robot, the extension and retraction of the telescopic piston rod is indirectly driven by a motor. When the robot arm is placed at a middle Z-position Lmid, which is on the half length of the total length of the piston in fully extracted state Lmax, the gas pressures in the gas tank and gas-oil accumulator are equal. If the balancing force should be reduced, the gas pressure in the gas-oil accumulator can be reduced by moving the robot arm to a z-position below the middle point Lmid and actuating the valve. To achieve this, the valve is opened and the robot arm is moved downwards, the gas flows from the gas-oil accumulator back into the gas tank. When the robot arm reaches the required position, the valve is closed. If the balancing force should be increased, the gas pressure in the gas-oil accumulator can be increased by moving the robot arm to a z-position above the middle point Lmid and activing the valve. To achieve this, the valve is opened and the robot arm is moved upwards, the gas flows from the gas tank into gas-oil accumulator. When the robot arm reaches the required position, the valve is closed.

The second cylinder chamber and the second accumulator chamber are configured to communicate with each other such that the liquid can flow between these two chambers. When the balancing force is set, the movement of the cylinder in the z-direction force the liquid to flow between the second cylinder chamber and the second accumulator chamber. If the robot arm moves upwards, the liquid in the second accumulator chamber flows into the second cylinder chamber and the displacement means moves downwards such that the volume of the air in the fist accumulator chamber expands in the chamber. If the cylinder moves downwards, the liquid in the second cylinder chamber flows into the second accumulator chamber such that the air in the in the first accumulator chamber is pressed together by the accumulator piston.

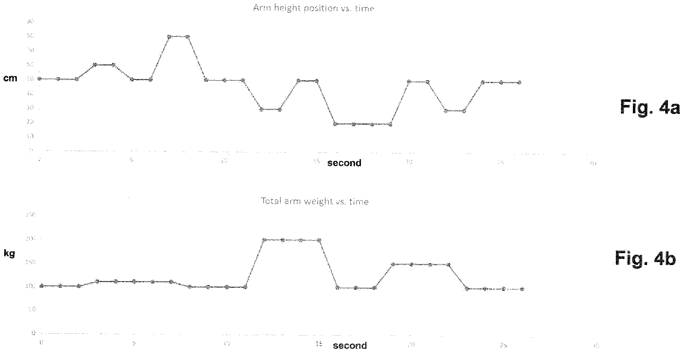

The controlling of the handling robot is provide by control cabinet including several computers. A firs computer can control the servo motion of the robot, and a second computer can control other functions of the robot, e.g. grippers. The control unit controlling the valve can be a third computer or integrated in the second computer. Figure 4a and 4b illustrate one example of work cycle of the robot applied for the die-sinking electrical discharge machining (EDM). In most applications, more than one electrodes are required to machine a workpiece. In order to increase the productivity, a magazine is available to store the electrodes used, the new workpieces and finished parts. The robot is used to load and unload the electrodes, the workpieces and the parts. Figure 4a shows the robot arm Z-position versus the time. The corresponding arm weights is shown in the figure 4b. In this example, the robot arm conducts three actions. The first action is unloading an electrode from an EDM machine into a magazine, where the electrode is temporally stored. At the time t=3s, the total arm weight is increased, because at this time the electrode is carried by the robot arm. Between the time t=7s and t=8s, the robot arm loads the electrode into the magazine, therefore, the total arm weight is decreased at the time t=9s. In this example, the Z-position of the electrode stored in the magazine is 80cm, which is higher than the Z-position of the electrode mounted in the machine tool, namely 60 cm. The second action is unloading a finished part from the EDM machine tool into the magazine, where the finished part are temporally stored. At the t=12s, the robot arm carries the finished part, which is much heavy than the electrode. Therefore, the total arm weights is increased to 200 kg. The third action is loading a new workpiece into the EDM machine tool. At the t=19s, the robot arm grips a new workpiece. This leads to an increased total arm weights to 150 kg.

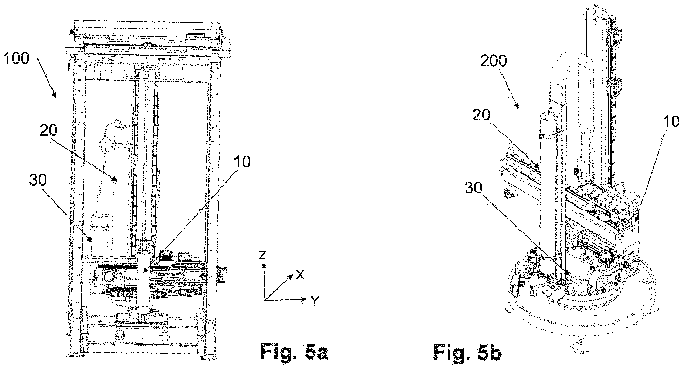

The balancing system can be installed in the handling robots with a cylindrical arm system. Those could be free standing robot or be in a cage as illustrated in figure 5a and 5b, respectively.

Figure 5a shows a first handling robot 100 including the balancing system. The first robot is an automatic changer with three servo controlled axis X and Z and one rotation axes. This robot is used to change e.g. workpieces to be mounted in the machine tools or electrodes used in an electrical discharge machine to machine a workpiece. The preload is below 100kg. The stroke in x-direction can be 1300mm and z-direction to 1500mm. Figure 5b shows a second handling robot 200 including the balancing system. The second robot is an automatic changer with three servo controlled axis X, and Z, and one rotation axes. This robot is used to change e.g. workpieces for machine tools or electrodes for electrical discharge machine. The preload can be larger than 100 kg, to 200 kg. The stroke in Z direction is 1400mm and X-direction can be 1500mm.

The arrangement of the balancing system in the first robot shown in fig. 5a and the second robot shown in fig. 5b is a placement of the accumulator and tank in the most favorable way in order not to increase the outer dimensions or needed floor space of the robots. The fig. 5a shows a standing accumulator and a standing tank, whereas the fig. 5b shows a standing accumulator and a laying tank.

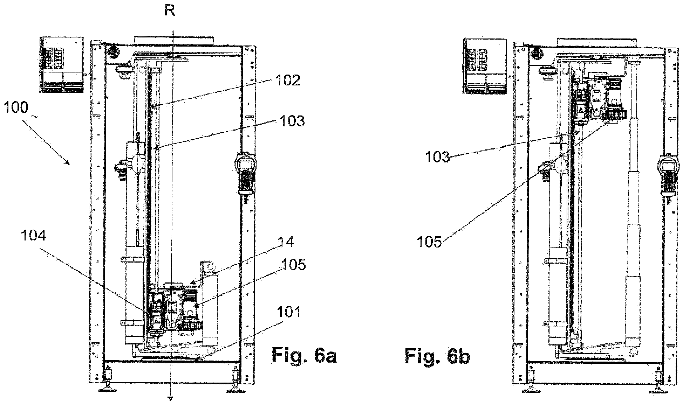

Figure 6a and 6b show the first robot with the robot arm at the lowest Z-position and the highest z-position, respectively. The handling robot comprises a frame with a base 101 for mounting a bar 102 and a ball screw 102 and the balancing system thereon. A motor housing including a motor 105, a transmission unit is attached on the lower side of the robot arm 14. The transmission unit is operationally connected to the ball and the ball screw to enable the robot arm to move in the Z-direction. The bar, the ball screw and the balancing system are attached on the base by bearings, such that a rotation about a rotation axis R is possible.

Figure 2 shows the steps of automatically adjusting the balancing force. In the step 1, an initial balancing force is set and whole robot work cycle, e.g. the work cycle shown in figures 4a and 4b is conducted using the set initial balancing force. During the running of work cycle, the electrical power consumption Pᵢₙᵢₜ required by the robot is determined. The initial balancing force Fᵢₙᵢₜ can be selected from a table depending on the highest weight, which the robot arm has to be carried. To set the initial balancing force, the robot arm is placed manually to a predetermined Z-position Zᵢₙᵢₜ and the valve is first opened and then closed. The duration of opening the valve is in the range of several second, e.g. 5 s. In the step 2, the balancing force is adjusted to a higher value Fₕ₁ by placing the arm in a z-position Zₕ₁ above the middle position and opening and closing the valve. This is performed automatically. In the step 3, the step 1 is repeated, namely the whole work cycle is conducted again and the power consumption Pₕ₁ required by using the adjusted balancing force is determined. If the power consumption Pₕ₁ using the adjusted balancing force Fₕ₁ is decreased, the step 2 is repeated by setting the z-position to Zₕ₂, which is higher than Z_{h1.} If the power consumption Pₕ₁ using the adjusted balancing force Fₕ₁ is increased, the step 4 is performed. In step 4, the balancing force adjusted to a value Fn, which is lower than the initial balancing force Fᵢₙᵢₜ by placing the robot arm in a Z-position Zₗ₁, which is below the middle position. In step 5, the work cycle is performed again by using the adjusted balancing force Fₗ₁ and determine the power consumption Pₗ₁. If the power consumption using the lower balancing force Fₗ₂, is decreased, the step 4 is repeated by setting the robot arm to a z-position Zₗ₂, which is lower than the last z-position Zₗ₁.

### LIST OF REFERENCES

- 1: balancing system
- 2: control unit
- 10: cylinder
- 11: cylinder housing
- 12: cylinder piston
- 13: cylinder chamber
- 14: robot arm
- 20: gas-oil accumulator
- 21: accumulator housing
- 22: first accumulator chamber
- 23: second accumulator chamber
- 24: displacement means (moveable)
- 30: gas tank
- 31: tank housing
- 32: tank chamber
- 40: valve
- 100: robot 1
- 101: robot frame
- 102: bar
- 103: ball screw
- 104: gear transmission
- 105: motor
- 200: robot 2

## Claims

1. A balancing system for a handling robot having a robot arm, in particular a cylindrical arm system comprising:
a. a cylinder, in particular a telescopic cylinder (10) comprising a cylinder chamber (13) for receiving a liquid and a piston having a piston rod (14), in particular a telescopic piston rod, on which the robot arm is attached and the robot arm can be driven by a motor to move in the vertical direction;
b. a gas-oil accumulator (20) comprising an accumulator housing (21) and a first accumulator chamber (22) for receiving the gas and a second accumulator chamber (23) for receiving the liquid, wherein a balancing force is defined by the pressure in the first accumulator chamber, and wherein the first accumulator chamber and the second accumulator chamber are separated by a movable displacement means (24) and the second accumulator chamber and the cylinder chamber can communicate with each other;
c. a gas tank (30) connected through a valve (40) to the gas-oil accumulator to change the pressure in the first accumulator chamber by actuating the valve; and
d. a control unit configured to determine the power consumption of the motor and to adjust the balance force based on the determined power consumption.

2. The system according to claim 1, wherein the balancing force is adjusted by changing the position of the robot arm in the vertical direction and actuating the valve.

3. The system according to claim 1 or 2, wherein the motor current is measured and the control unit is configured to determine the power consumption based on the measured motor current.

4. The system according to one of claims 1 to 3, wherein the control unit is configured to determine an optimal balancing force for each skift and/or each work cycle and/or each part of one work cycle.

5. The system according to claim 4, wherein a storage unit is provided to store the determined optimal balancing force and/or the Z-position of robot arm corresponding to the determined optimal balancing force, and/or the corresponding identify of skift, work cycle.

6. The system according to one of claims 1 to 5, wherein the control unit is configured to use a machine-learning algorithm to determine the optimal balancing force required for each skift and/or each work cycle and/or each step of one work cycle., in particular, based on an algorithm for searching a minimum of a function, such as golden-section search.

7. The system according to one of claims 1 to 6, wherein the system further comprises a storage unit to store a plurality values of an initial balancing force and the corresponding payloads, in particular, the payload is defined by the highest weight to be carried by the robot arm during one work cycle.

8. The system according to one of claims 1 to 7, wherein the control unit is configured to perform the following steps:
a. selecting one of the initial balancing force Fᵢₙᵢ from the storage unit;
b. controlling the robot arm to be moved to a pre-defined initial Z-position Zᵢₙᵢ and actuating the valve, in particular opening the valve for a defined time period and closing the valve;
c. running a work cycle and calculating an initial power consumption Pᵢₙᵢ of the motor;
d. adjusting the balancing force by placing the robot arm in a Z-position higher or lower than the initial Z-position and actuating the valve;
e. determining the optimal balancing force, wherein repeating the steps c and d until an optimal power consumption is found based on the machining-learning algorithm.

9. The system according to claim 8, wherein the adjusting balancing force comprises following steps:
a. increasing the balance force by moving the robot arm to a Z-position higher than the previous Z- position and actuating the valve and calculating the power consumption using the increased balancing force; and/or
b. decreasing the balance force by moving the robot arm to a Z-position lower than the previous Z-position and actuating the valve and calculating the power consumption using the decreased balancing force; and/or
c. setting the balancing force to a first high balancing force Fₕ₁ by moving the robot arm to a first high Z-position Zₕ₁, which is higher than the initial Zᵢₙᵢ position and actuating the valve and running the work cycle and calculating a first power consumption Pₕ₁;
d. if the first high power consumption Pₕ₁ is lower than the initial power consumption Pᵢₙᵢ, repeating the step a;
e. if the first power consumption Pₕ₁ is higher than the initial power consumption Pᵢₙᵢ, setting the balancing force to a first low balancing force F_{l1,} which is lower than the initial balancing force Fᵢₙᵢ by placing the robot arm to a first low Z-position Zₗ₁ lower than the initial Z-position Zᵢₙᵢ and running the work cycle and calculating a first low power consumption Pₗ₁;
f. if the first low power consumption Pₕ₁ is lower than the initial power consumption P_{int,} repeating the step b;

10. A handling robot comprising a base, on which the balancing system according to one of claims of 1 to 9 is fixedly mounted and a motor to drive the robot arm in the vertical, in particular Z-direction.

11. A method for automatically adjusting the balancing force of the balancing system according to one of claims 1 to 10, comprising the following steps:
a. selecting an initial balancing force Fᵢₙᵢ from the storage unit;
b. controlling the robot arm to be moved to a pre-defined initial Z-position Zᵢₙᵢ and actuating the valve;
c. running a work cycle and calculating an initial power consumption Pᵢₙᵢ of the motor;
d. adjusting the balancing force by placing the robot arm in a Z-position higher or lower than the initial Z-position and actuating the valve, and calculating the power consumption; and
e. determining an optimal balancing force, wherein repeating the step d until an optimal power consumption is found based on a machine-learning algorithm, in particular a minimum power consumption is found by using the gold-section search algorithm.

12. The method according to claim 11, wherein the adjusting balancing force comprises following steps:
a. increasing the balance force by moving the robot arm to a Z-position higher than the previous Z- position and actuating the valve and calculating the power consumption using the increased balancing force;and/or
b. decreasing the balance force by moving the robot arm to a Z-position lower than the previous Z-position and actuating the valve and calculating the power consumption using the decreased balancing force;and/or
c. setting the balancing force to a first high balancing force Fₕ₁ by moving the robot arm to a first high Z-position Zₕₗ, which is higher than the initial Zᵢₙᵢ position and actuating the valve and running the work cycle and calculating a first power consumption Pₕ₁;
d. if the first high power consumption Pₕ₁ is lower than the initial power consumption Pᵢₙᵢ, repeating the step a;
e. if the first power consumption Pₕ₁ is higher than the initial power consumption Pᵢₙᵢ, setting the balancing force to a first low balancing force F_{l1,} which is lower than the initial balancing force Fᵢₙᵢ by placing the robot arm to a first low Z-position Zn lower than the initial Z-position Zᵢₙᵢ and running the work cycle and calculating a first low power consumption Pₗ₁;and/or
f. if the first low power consumption Pₕ₁ is lower than the initial power consumption P_{int,} repeating the step b;
